# EUROPÄISCHE PATENTSCHRIFT

(11) **EP 0 598 992 B1**
(45) Veröffentlichungstag und Bekanntmachung des Hinweises auf die Patenterteilung: **03.04.1996**
(21) Anmeldenummer: 93113195.7
(22) Anmeldetag: 18.08.1993
(51) Int. Cl.: A01C 7/12

(54) **Drillmaschine**
Seed drill
Semoir

(30) Priorität: 25.11.1992 DE 9216015 U
(43) Veröffentlichungstag der Anmeldung: 01.06.1994
(73) Patentinhaber: RABEWERK BERNBURG GmbH & Co., D-06406 Bernburg (DE)
(72) Erfinder: Ballmer, Ernst Dipl.-Ing., D-06406 Bernburg (DE); Richter, Gerhard Dipl.-Ing., D-06429 Nienburg (DE); Gehrke, Rudolf Dipl.-Ing., D-49152 Bad Essen (DE)
(74) Vertreter: Missling, Arne, Dipl.-Ing.

(56) Entgegenhaltungen:
- EP-A- 0 160 370
- EP-A- 0 425 934
- BE-A- 457 179
- DE-C- 161 767
- DE-C- 446 079

## Beschreibung

Die Erfindung bezieht sich auf eine Drillmaschine mit einem Saatgutkasten und mehreren Sägehäusen, welche zumindest ein Dosierrad aufweisen und mit dem Saatgutkasten in Verbindung stehen.

Eine Drillmaschine der bekannten Art ist aus der DE-OS 27 26 915, BE-A-457 179 oder dem DE-GM 85 22 161 bekannt. Übliche Saatgutkästen umfassen ein insbesondere in der Seitenansicht trichterförmiges Gehäuse aus Metall, welches mit einzelnen gestanzten Ausnehmungen versehen ist, in welche die einzelnen Gehäuse eingesetzt sind. Zusätzlich sind Bohrungen oder Ausnehmungen notwendig, um das Sägehäuse zu befestigen, beispielsweise durch Schrauben oder durch einzuhängende Laschen o.ä. Hieraus ergibt sich, daß ein hoher Fabrikationsaufwand betrieben werden muß, um das Sägehäuse herzustellen. Weiterhin ergibt sich bei Drillmaschinen die Notwendigkeit, unterschiedliche Saatgutreihen-Abstände vorzusehen. Aus diesem Grunde ist es erforderlich, die jeweiligen Saatgutkästen in unterschiedlichster Weise den jeweiligen Anforderungen anzupassen. Dies bedingt eine Kleinstserien- oder eine Einzelanfertigung eines jeden einzelnen Saatgutkastens, wodurch sich die Produktionskosten weiter erhöhen. Bei den beiden oben genannten Druckschriften werden Ausführungsbeispiele genannt, welche jeweils eine exakte Anordnung der Ausnehmungen zum Einhängen der Haken der Sägehäuse erfordern. Eine weitere sich bei dieser Ausgestaltungsform ergebende Problematik liegt darin, daß die Befestigungshaken nicht in dem Innenraum des Saatgutkastens vorstehen dürfen, da hierdurch Undichtigkeiten hervorgerufen würden, bzw. der Fluß des Saatgutes gestört werden würde. Deshalb sind zusätzliche Befestigungsbereiche erforderlich.

Die DE-AS 1,159,678 beschreibt, ähnlich wie die DE-PS 449,330 Sägehäuse, welche von unten an den Saatgutbehälter angelegt werden. Bei der letztgenannten Patentschrift sind die einzelnen Sägehäuse an einer Platte montiert, welche gegen den Saatgutbehälter verspannt wird. Diese Ausgestaltungsform ist sehr aufwendig und schwer handhabbar, insbesondere da ständig die Gefahr besteht, daß die Platte nicht dicht an dem Saatgutkasten anliegt. Bei der Ausgestaltungsform gemäß der DE-AS ist ebenfalls die Ausformung einer passenden Ausnehmung des Saatgutkastens für jedes Sägehäuse erforderlich.

Der Erfindung liegt die Aufgabe zugrunde, eine Drillmaschine der eingangs genannten Art zu schaffen, welche bei einfachem Aufbau und einfacher, betriebssicherer Anwendbarkeit kostengünstig herstellbar ist und insbesondere eine leichte Anpassung an unterschiedliche Saatgut-Reihenabstände ermöglicht.

Erfindungsgemäß wird die Aufgabe dadurch gelöst, daß der Saatgutkasten an einem unteren Bereich eine sich im wesentlichen über dessen gesamte Breite erstreckende Öffnung aufweist, an welche die Sägehäuse einzeln angesetzt sind.

Die erfindungsgemäße Drillmaschine zeichnet sich durch eine Reihe erheblicher Vorteile aus. Da sich die Öffnung über die gesamte Maschinenbreite erstreckt, können die einzelnen Sägehäuse an diese Öffnung angesetzt werden, wobei der Reihenabstand zur Abgabe des Saatgutes lediglich von der Konstruktion des Sägehäuses, nicht jedoch von der Ausgestaltung der Öffnung des Saatgutkastens abhängt. Es ist somit möglich, einen standardmäßigen Saatgutkasten herzustellen, welcher mit unterschiedlichen Sägehäusen in unterschiedlicher Zahl bestückt werden kann. Hierdurch lassen sich die Herstellungskosten ganz erheblich reduzieren, insbesondere da für den Saatgutkasten selbst nur ein sehr geringer Fertigungsaufwand benötigt wird. Im Gegensatz hierzu erfordert der Stand der Technik einen sehr großen Aufwand, um den Saatgutkasten an die entsprechend zu verwendenden Sägehäuse bzw. deren Anzahl anzupassen.

Erfindungsgemäß ist die Öffnung bevorzugterweise in Form eines rechteckigen Schlitzes angeordnet, welcher in günstiger Weiterbildung einen umlaufenden Befestigungsrand aufweist, welcher zur Klemmung der Sägehäuse dienen kann. Die Öffnung kann horizontal oder geneigt ausgerichtet sein, und es ist auch möglich, diese im Bereich einer der geneigten Seitenwände des Saatgutkastens auszuformen.

Die Sägehäuse können erfindungsgemäß in einfachster Weise hergestellt werden, beispielsweise können diese aus einem Kunststoffmaterial gefertigt sein. Die Sägehäuse sind günstigerweise im wesentlichen pyramidenstumpfförmig ausgebildet, wobei diese Form eine rechteckige obere Einlauföffnung vorsieht, welche in einfachster Weise an die Dimensionierung der bevorzugt rechteckigen Öffnung des Saatgutkastens angepaßt werden kann.

Das Sägehäuse ist weiterhin bevorzugterweise so ausgebildet, daß es zumindest an einer der Seitenwandungen eine Umbördelung erlaubt, um an dem Rand der Öffnung des Saatgutkastens befestigt zu werden. Die beiden Seitenkanten können so ausgebildet sein, daß benachbarte Sägehäuse dicht aneinanderliegend in die Öffnung des Saatgutkastens eingesetzt werden können

Die pyramidenstumpfförmige Ausgestaltung der Sägehäuse erlaubt es weiterhin, die vordere und die rückseitige Wandung in gleicher Weise zu neigen, wie die vorder- und rückseitige Wandung des Saatgutkastens, so daß das Saatgut glatt in das Sägehäuse einfließen kann.

Um unter Verwendung eines Sägehäuses unterschiedliche Saatgutreihen-Abstände realisieren zu können, ist es möglich, den oberen Randbereich des Sägehäuses abbrechbar oder variabel bzw. elastisch auszugestalten, so daß beim Einbau die entsprechenden Reihenabstände vorgesehen werden können. Es ist auch möglich, zwischen benachbarte Sägehäuse ein Zwischenstück einzulegen.

Vorteilhaft ist der Übergang zwischen Saatgutkasten und Sägehäuse mit gleichbleibendem oder sich vergrößerndem Querschnitt ausgebildet, so daß einer Brückenbildung des Saatgutes entgegengewirkt wird.

Der Saatgutkasten hat eine Trichterform, die direkt auf die Stelle ausgerichtet ist, die das Saatgut an der Unterseite des Särades passieren muß. Daraus folgt, daß beim Beenden des Aussäens nur eine geringe Restmenge im Bereich der Säräder verbleiben kann. Das ist in Anbetracht teueren Saatgutes von einem beachtlichen Vorteil, denn die Restmengen sind nicht verwertbar.

Mit Drillmaschinen wird auch Feinsaatgut ausgebracht, und zwar in der Regel nicht mit dem engen Saatreihenabstand wie für Getreide. Bei den üblichen Sämaschinen werden dann Einsatzkästen gebraucht, die an solchen Stellen in den Saatgutbehälter gesetzt werden, wo zugeordnete Säschare Saatgut ablegen sollen. Andernfalls würde zum Schluß eine große Menge Saatgut übrig bleiben, die nicht mehr verwertet werden kann. Erfindungsgemäß sind die Sägehäuse direkt als Trichter ausgebildet, die groß genug sind zur Aufnahme von Feinsaatgut. Auf Einsätze kann somit verzichtet werden.

Im folgenden wird die Erfindung anhand von Ausführungsbeispielen in Verbindung mit der Zeichnung beschrieben. Dabei zeigt:
- Fig. 1: eine vereinfachte Seiten-Schnittansicht eines Teilbereiches des erfindungsgemäßen Saatgutkastens und eines Sägehäuses,
- Fig. 2: eine stirnseitige Teilansicht zweier in den Saatgutkasten eingesetzter Sägehäuse gemäß der Anordnung von Fig. 1,
- Fig. 3: eine stirnseitige Ansicht eines weiteren Ausführungsbeispieles eines Sägehäuses,
- Fig. 4: eine stirnseitige Ansicht eines Distanzstückes,
- Fig. 5: eine Seitenansicht des in Fig. 4 gezeigten Distanzstückes,
- Fig. 6: eine Teil-Seiten-Schnittansicht ähnlich Fig. 1 eines weiteren Ausgestaltungsbeispieles,
- Fig. 7: eine stirnseitige Ansicht eines Sägehäuzes zur Verdeutlichung der Lagerung eines Dosierrades, und
- Fig. 8: eine vereinfachte Seiten-Schnittansicht eines weiteren Ausführungsbeispieles, ähnlich der Fig. 1 und 6.

In den Zeichnungen sind gleiche Teile mit gleichen Bezugsziffern versehen.

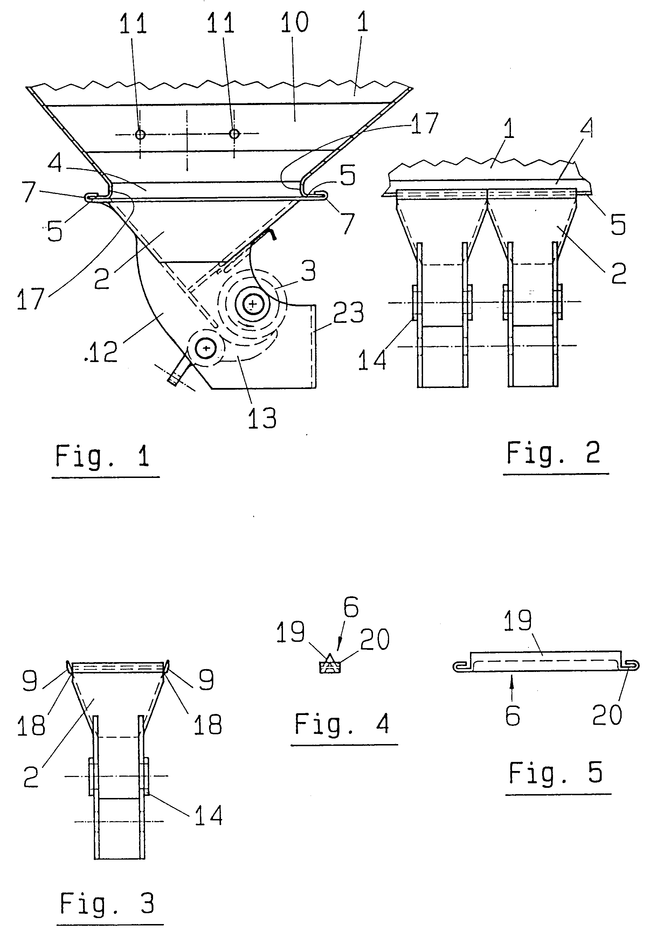

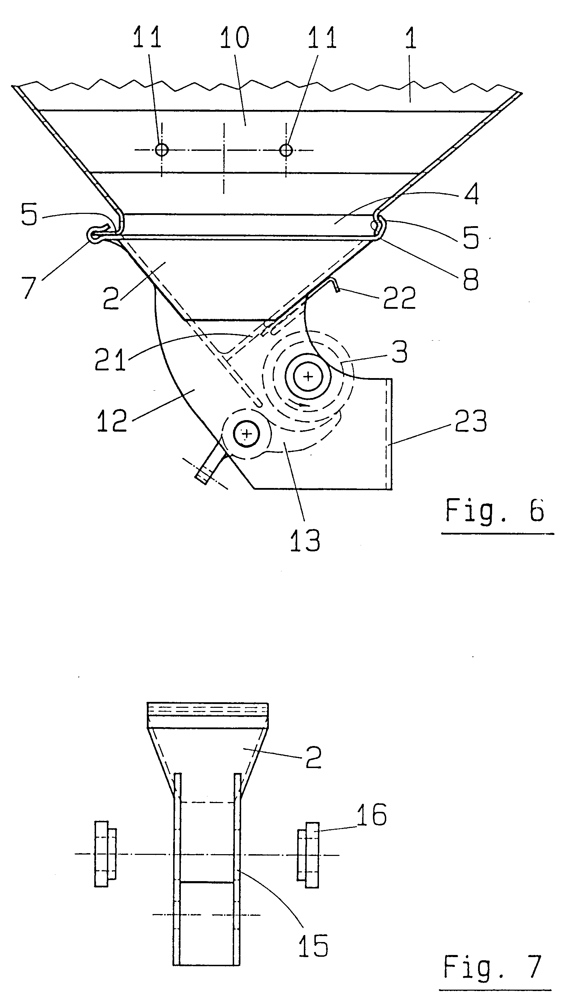

Die Fig. 1 und 6 zeigen in der Seitenansicht jeweils den unteren Bereich eines Saatgutkastens 1, welcher eine rechteckige, hier horizontal angeordnete untere Öffnung 4 aufweist. Die Öffnung 4 ist umgeben von einem umlaufenden Befestigungsrand 5. Zur Stabilisierung sind in dem Saatgutkasten 1 Versteifungsstege 10 eingesetzt, welche, wie durch die Ausnehmungen 11 angedeutet, zur Lagerung von Rührwellen dienen können. Diese dienen der Auflockerung des Sägutes und sind aus dem Stand der Technik bekannt.

Aus der gezeigten Darstellung ergibt sich, daß es erfindungsgemäß möglich ist, die eine oder die mehreren Rührwellen an bestmöglicher Stelle des Saatgutkastens anzuordnen. Es ist insbesondere darauf hinzuweisen, daß die Anbringung und Ausgestaltung der Sägehäuse nicht die Anordnung der Rührwellen beeinflussen. Es ergibt sich somit eine sehr störungsfreie Ausbringung des Saatgutes.

Wie insbesondere aus Fig. 2 ersichtlich ist, sind erfindungsgemäß in der Öffnung 4 mehrere Sägehäuse 2 angeordnet, deren Wandungen im wesentlichen kegelstumpfförmig ausgebildet sind. Die Fig. 1 und 2 zeigen, daß sich der vordere und der hintere Befestigungsrand 5 der Öffnung 4 des Saatgutkastens 1 jeweils horizontal erstreckt, so daß ein Bördelrand 7 der vorderen und hinteren Wandung des jeweiligen Sägehäuses 2 um den Befestigungsrand 5 gelegt werden kann. Auf diese Weise ist es sehr einfach möglich, die Sägehäuse 2 an dem Saatgutkasten zu lagern, beispielsweise durch seitliches Aufschieben oder durch elastisches Verformen des Bördelrandes 7, sofern die Sägehäuse aus einem geeigneten Material hergestellt sind.

Die Fig. 2 zeigt, daß benachbarte Sägehäuse 2 dichtend aneinanderliegen, so daß ein Austreten von Saatgut verhindert wird.

Die Sägehäuse weisen jeweils einen nach unten gerichteten Ansatz 12 auf, welcher im wesentlichen aus in Fahrtrichtung ausgerichteten Wandungen besteht, wie insbesondere aus den Fig. 2 und 3 ersichtlich ist. Zwischen den Wandungen befindet sich zumindest ein Dosierrad 3, unter welchem eine schwenkbar gelagerte Bodenklappe 13 angeordnet ist. Die Wandungen des Ansatzes 12 können so ausgebildet sein, daß sie Lagerungen 14 für die Dosierräder 3 tragen (siehe Fig. 2).

Es ist jedoch auch möglich, wie in Fig. 7 gezeigt, die Seitenwandungen des Ansatzes 12 mit vergrößerten Ausnehmungen 15 zu versehen, in welche jeweils eine Lagerbuchse 16 eingefügt werden kann. Hierdurch sind die Dosierräder von außen durch die Ausnehmungen 15 zugänglich, um beispielsweise Fahrgassenschaltungen zu betätigen. Derartige Ausgestaltungen sind jedoch aus dem Stand der Technik bekannt, so daß auf eine weitere Beschreibung, insbesondere des Dosierrades 3 und der Bodenklappe 13 verzichtet werden kann.

Ein weiterer Vorteil der in Fig. 7 gezeigten Ausführung besteht darin, daß Schmutz und Staub, welcher sich zwischen den Särädern 3 und den Wandungen des Sägehäuses 2 sammeln sollte, sich nicht in diesem Zwischenraum anhäufen kann, sondern vielmehr durch die Öffnungen 15, welche größer sind als der Wellendurchmesser, wieder ins Freie gelangen kann.

Die Erfindung ermöglicht die Verwendung unterschiedlicher Formen von Sägehäusen, insbesondere hinsichtlich der Lagerung der Dosierräder, der Bodenklappen o.ä.

In Fig. 3 ist eine Ausgestaltungsform eines Sägehäuses 2 gezeigt, welches an seinen seitlichen Wandungen obere Rippen 9 aufweist. Diese Rippen bilden eine Verbreiterung des Sägehäuses 2, liegen an benachbarten Rippen an und ihre Enden können gegen eine vertikale Wandung 17 des Randes der Öffnung 4 des Saatgutkastens 1 angelegt werden (siehe Fig. 1). Hierdurch ist es möglich, einen vergrößerten Reihenabstand zwischen benachbarten Sägehäusen zu erhalten. Die Fig. 3 zeigt, daß am unteren Übergangsbereich der Rippe 9 eine Kerbe 18 vorgesehen ist, welche es erlaubt, zumindest eine der Rippen 9 abzubrechen, um den Abstand der Sägehäuse 2 anzupassen.

Wie aus Fig. 1 ersichtlich ist, weist der Befestigungsrand 5 des Saatgutkastens 1 eine vertikale Wandung 17 auf. Diese dient dazu, die Rippen 9 des Sägehäuses 2 dicht anzulegen. Zugleich bilden die vertikalen Wandungen 17 eine Fallstufe, welche die Fließfähigkeit und die Auflockerung des Saatgutes verbessert. Es versteht sich, daß die vertikalen Wandungsabschnitte 17 auch nach außen divergierend ausgebildet sein können, um die Wirkung der Fallstufe zu verstärken. Auch hierdurch wird die Bildung von Saatgutbrücken vermindert. Es ist somit möglich, auch Feinsaatgut in großen Mengen, beispielsweise bis 700 g pro Auslauf einzufüllen. Zugleich besteht die Möglichkeit, den Saatkasten bei Leerung vollständig auslaufen zu lassen.

Es ist weiterhin möglich, die Rippen 9 elastisch auszubilden, damit diese mit einer gewissen Vorspannkraft an benachbarten Sägehäusen anliegen und wodurch die Abstände variiert werden können.

Um einen größeren Abstand benachbarter Sägehäuse 2 vorzusehen, kann ein Distanzelement 6 verwendet werden, welches in den Fig. 4 und 5 gezeigt ist. Das Distanzelement 6 umfaßt jeweils einen dachartigen Mittelteil 19 sowie Bördelränder 20. Der Mittelteil 19 dient dazu, ein ungestörtes Abfließen des Saatgutes in die beiden benachbarten Sägehäuse 2 sicherzustellen. Mittels des Bördelrandes 20 ist eine Befestigung an der Öffnung des Saatgutkastens, ähnlich wie in Fig. 1 gezeigt, möglich.

Die Fig. 6 zeigt eine Ausführungsbeispiel, bei welchem die einzelnen Sägehäuse nicht seitlich auf den Saatgutkasten aufgeschoben werden müssen. Vielmehr ist beispielsweise am vorderen Wandungsbereich des Sägehäuses 2 ein Bördelrand 7 vorgesehen, während der hintere Wandungsbereich einen elastischen Klemmrand 8 aufweist, welcher formschlüssig über den Befestigungsrand 5 der Öffnung 4 des Saatgutkastens 1 aufgeschoben oder beispielsweise mittels einer oder mehrerer Schrauben gesichert werden kann. Somit können die einzelnen Sägehäuse beliebig montiert bzw. demontiert werden, ohne daß sämtliche Sägehäuse des Saatgutkastens entfernt werden müssen. Diese Ausgestaltungsform ist insbesondere hinsichtlich auftretender Reparaturen o.ä. von besonderem Vorteil.

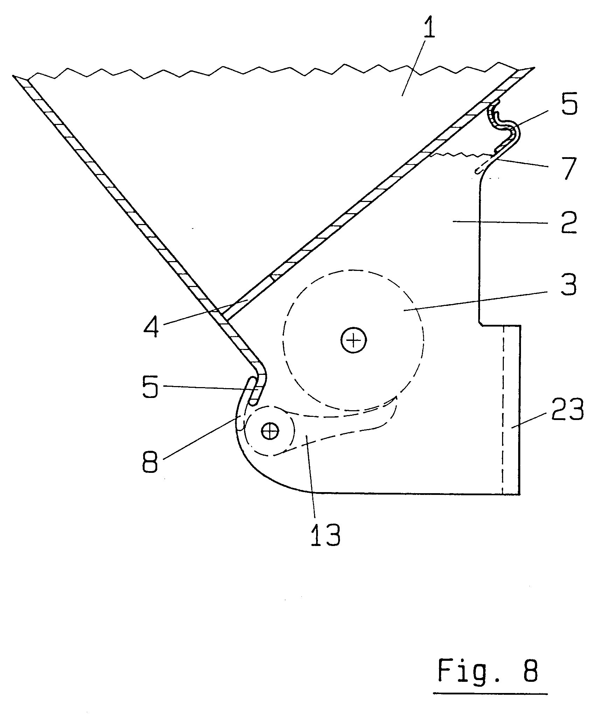

Die Fig. 8 zeigt eine weitere Ausgestaltungsvariante, bei welcher die Öffnung 4 des Saatgutkastens 1 nicht horizontal, sondern geneigt in einer Wandung des Saatgutkastens 1 ausgebildet ist. Die Befestigung ist ähnlich der in Fig. 6 dargestellten. Es ist ersichtlich, daß auch durch einfache Klammern, welche über Flansche oder Kragen geschoben werden, eine sichere Befestigung möglich ist. Das Sägehäuse 2 kann also auch an einer Seitenwandung des Säkastens 1, gehaltert sein und muß nicht notwendigerweise, wie in den Fig. 1 und 6 gezeigt, direkt unterhalb des Säkastens 1 angebracht werden.

Die Fig. 6 zeigt weiterhin eine rechteckige Öffnung 21 des Sägehäuses 2, durch welche das Saatgut zum Dosierrad 3 gelangen kann. Je nach Saatgutart und auszubringender Menge ist die Öffnung 21 unterschiedlich groß zu wählen, dies kann mittels eines Schiebers 22 erreicht werden, welcher in unterschiedlichen Stellungen festrastbar ist.

Die Sägehäuse weisen, wie aus dem Stand der Technik bekannt, eine Wandung 23 auf, welche die seitlichen Wandungen überbrückt. Unterhalb der Wandungen 12 und 23 kann ein Trichter schwenkbar gelagert sein, durch welchen das Saatgut einem Saatrohr zugeführt wird, welches zum Säschar führt. Diese Einzelheiten entsprechend dem Stand der Technik, so daß auf eine detaillierte Beschreibung verzichtet werden kann.

Die Erfindung ist nicht auf das gezeigte Ausführungsbeispiel beschränkt, vielmehr ergeben sich im Rahmen der Erfindung vielfältige Abwandlungs- und Modifikationsmöglichkeiten, wie sie in den Ansprüchen definiert sind.

Zusammenfassend ist folgendes festzustellen:
Die Erfindung bezieht sich auf eine Drillmaschine mit einem Saatgutkasten (1) und mehreren Sägehäusen (2), welche zumindest ein Dosierrad (3) aufweisen und mit dem Saatgutkasten (1) in Verbindung stehen. Um den Saatgutkasten (1) standardmäßig mit geringem Aufwand herstellen zu können und eine Anpassung an unterschiedliche Reihenabstände des Saatgutes zu ermöglichen, ist vorgesehen, daß der Saatgutkasten (1) an seinem unteren Bereich eine sich im wesentlichen über dessen gesamte Breite erstreckende Öffnung (4) aufweist, an welche die Sägehäuse (2) einzeln angesetzt sind. (Fig. 1)

## Patentansprüche

1. Drillmaschine mit einem Saatgutkasten (1) und mehreren Sägehäusen (2), welche jeweils zumindest ein Dosierrad (3) aufweisen und mit dem Saatgutkasten (1) in Verbindung stehen, dadurch gekennzeichnet, daß der Saatgutkasten (1) an seinem unteren Bereich eine sich im wesentlichen über dessen gesamte Breite erstreckende Öffnung (4) aufweist, an welche die Sägehäuse (2) einzeln angesetzt sind.

2. Drillmaschine nach Anspruch 1, dadurch gekennzeichnet, daß die Öffnung (4) in Form eines rechteckigen Schlitzes ausgebildet ist.

3. Drillmaschine nach Anspruch 1 oder 2, dadurch gekennzeichnet, daß die Öffnung (4) einen umlaufenden Befestigungsrand (5) zur Klemmung der Sägehäuse (2) aufweist.

4. Drillmaschine nach einem der Ansprüche 1 bis 3, dadurch gekennzeichnet, daß die Öffnung (4) im wesentlichen horizontal ausgerichtet ist.

5. Drillmaschine nach einem der Ansprüche 1 bis 4, dadurch gekennzeichnet, daß die Sägehäuse (2) jeweils im wesentlichen pyramidenstumpfförmig ausgebildet sind und zum Durchlauf des Saatgutes einen Trichter bilden, in dessen unterem Bereich zumindest ein Dosierrad (3) gelagert ist.

6. Drillmaschine nach einem der Ansprüche 1 bis 5, dadurch gekennzeichnet, daß die Sägehäuse (2) aus Kunststoff hergestellt sind.

7. Drillmaschine nach einem der Ansprüche 1 bis 6, dadurch gekennzeichnet, daß die Breite der Öffnung (4) des Saatgutkastens (1) so bestimmt ist, daß eine vorgegebene Anzahl von Sägehäusen (2) eventuell unter Zwischenschaltung von Distanzelementen (6) dichtend in die Öffnung eingesetzt sind.

8. Drillmaschine nach einem der Ansprüche 1 bis 7, dadurch gekennzeichnet, daß das Sägehäuse (2) an seinem oberen Randbereich an zumindest einer Seite mit einem Bördelrand (7) versehen ist.

9. Drillmaschine nach einem der Ansprüche 1 bis 8, dadurch gekennzeichnet, daß das Sägehäuse (2) an seinem oberen Randbereich an zumindest einer Seite mit einem vorzugsweise elastischen, den Befestigungsrand (5) der Öffnung (4) des Saatgutkastens (1) formschlüssig greifenden Klemmrand (8) versehen ist.

10. Drillmaschine nach einem der Ansprüche 1 bis 9, dadurch gekennzeichnet, daß das Sägehäuse (2) an seinem oberen Randbereich an zumindest einer Seite eine zumindest seitlich vorstehende Rippe (9) aufweist.

11. Drillmaschine nach Anspruch 10, dadurch gekennzeichnet, daß die Rippe (9) als Abbrechteil ausgebildet und/oder elastisch ausgebildet ist.

12. Drillmaschine nach einem der Ansprüche 1 bis 11, dadurch gekennzeichnet, daß der Übergang des Saatgutkastens (1) zum Sägehäuse (2) einen Abschnitt mit gleichbleibendem oder sich nach unten erweiternden Querschnitt aufweist.

## Claims

1. A seed drill with a seed hopper (1) and a plurality of sowing enclosures (2) which each have at least one metering wheel (3) and are in contact with the seed hopper (1), **characterised in that** the lower region of the seed hopper (1) has an opening (4) which extends substantially across the entire length thereof and on which the sowing enclosures (2) are mounted individually.

2. A seed drill according to Claim 1, **characterised in that** the opening (4) takes the shape of a rectangular slot.

3. A seed drill according to Claim 1 or 2, **characterised in that** the opening (4) has a circumferential mounting edge (5) for clamping the sowing enclosures (2).

4. A seed drill according to any of Claims 1 to 3, **characterised in that** the opening (4) is directed substantially horizontally.

5. A seed drill according to any one of Claims 1 to 4, **characterised in that** the sowing enclosures (2) are each shaped substantially like a truncated pyramid and form a funnel for filtering the seed, and at least one metering wheel (3) is mounted in the lower region of the funnel.

6. A seed drill according to any of Claims 1 to 5, **characterised in that** the sowing enclosure (2) is made of plastic.

7. A seed drill according to any of Claims 1 to 6, **characterised in that** the width of the opening (4) of the seed hopper (1) is determined in such a manner that by means of spacing components a specified number of sowing enclosures (2) may be inserted into the opening to form a seal (6).

8. A seed drill according to any of Claims 1 to 7, **characterised in that** the upper edge region of the sowing enclosure (2) is provided with a flanged edge (7) on at least one side.

9. A seed drill according to any of Claims 1 to 8, **characterised in that** the upper edge region of the sowing enclosure (2) is provided on at least one side with a preferably resilient clamping edge (8) engaging the mounting edge (5) of the opening (4) of the seed hopper (1) to form a positive connection.

10. A seed drill according to any of Claims 1 to 9, **characterised in that** the upper edge region of the sowing enclosure (2) has on at least one side a rib (9) projecting at least laterally.

11. A seed drill according to Claims 10, **characterised in that** the rib (9) is formed as a detachable member and/or is resilient.

12. A seed drill according to any of Claims 1 to 11, **characterised in that** the transition point of the seed hopper (1) to the sowing enclosure (2) has a section with a cross-section which is uniform or widens towards the bottom.

## Revendications

1. Semoir comportant une caisse à semences (1) et plusieurs compartiments à semences (2) qui présentent chacun au moins une roue doseuse (3) et qui sont reliés à la caisse à semences (1), caractérisé en ce que la caisse à semences (1) présente, à sa partie inférieure, une ouverture (4) s'étendant essentiellement sur toute sa largeur et à laquelle les compartiments à semences (2) sont raccordés individuellement.

2. Semoir suivant la revendication 1, caractérisé en ce que l'ouverture (4) est réalisée sous la forme d'une fente rectangulaire.

3. Semoir suivant la revendication 1 ou la revendication 2, caractérisé en ce que l'ouverture (4) présente une bordure de renfort (5) pour raccorder par pincement les compartiments à semences (2).

4. Semoir suivant l'une des revendications 1 à 3, caractérisé en ce que l'ouverture (4) a une direction essentiellement horizontale.

5. Semoir suivant l'une des revendications 1 à 4, caractérisé en ce que les compartiments à semences (2) sont chacune essentiellement réalisés en forme de pyramide tronquée, et forment, pour le passage de la semence, une trémie, dans la zone inférieure de laquelle est montée au moins une roue doseuse (3).

6. Semoir suivant l'une des revendications 1 à 5, caractérisé en ce que les compartiments à semences (2) sont réalisés en matière plastique.

7. Semoir suivant l'une des revendications 1 à 6, caractérisé en ce que la largeur de l'ouverture (4) de la caisse à semence (1) est déterminée de telle façon qu'un nombre donné de compartiments à semences (2) sont installés dans l'ouverture en assurant l' étanchéité, éventuellement avec intercalation d'éléments écarteurs (6).

8. Semoir suivant l'une des revendications 1 à 7, caractérisé en ce que, dans la zone de son bord supérieur, le compartiment à semences (2) est équipé, sur au moins un côté, d'un bord rabattu (7).

9. Semoir suivant l'une des revendications 1 à 8, caractérisé en ce que le compartiment à semences (2), dans la zone de son bord supérieur est équipé, sur au moins un côté, d'une bordure (8) de pincement, de préférence élastique, faisant prise, par conjugaison de formes, sur une bordure de renfort (5) de l'ouverture (4) de la caisse à semences (1).

10. Semoir suivant l'une des revendications 1 à 9, caractérisé en ce que le compartiment à semences (2) présente, sur au moins un côté, dans la zone de son bord supérieur une nervure (9) en saillie, au moins latéralement.

11. Semoir suivant la revendication 10, caractérisé en ce que la nervure (9) est réalisée sous la forme d'une partie pouvant être rompue et/ou est réalisée élastique.

12. Semoir suivant l'une des revendications 1 à 11, caractérisé en ce que le passage reliant la caisse à semences (1) au compartiment à semences (2) présente une partie présentant une section constante ou s'élargissant vers le bas.
